# EUROPEAN PATENT SPECIFICATION

(11) **EP 1 271 409 B1**
(45) Date of publication and mention of the grant of the patent: **14.12.2016**
(21) Application number: 01115824.3
(22) Date of filing: 28.06.2001
(51) Int. Cl.: G06T 11/60

(54) **Method and System for Generating a digital image including a transparent object**
Verfahren und System zur Erzeugung eines digitalen Bildes, das ein transparentes Objekt umfasst
Porcédé et système permettant de générer une image numérique comprenant un objet transparent

(43) Date of publication of application: 02.01.2003
(73) Proprietor: Oracle America, Inc., Redwood City, CA 94065 (US)
(72) Inventor: Loeschky, Dieter, c/o Star Office Software, 20097 Hamburg (DE); Ahrens, Kai, c/o Star Office Software, 20097 Hamburg (DE)
(74) Representative: D Young & Co LLP

(56) References cited:
- EP-A- 0 280 582
- EP-A- 0 753 832
- EP-A- 0 924 653
- EP-A- 1 109 093
- US-A- 5 933 588
- BRAQUELAIRE J-P ET AL: "Geometrical, topological, and hierarchical structuring of overlapping 2-D discrete objects" COMPUTERS AND GRAPHICS, PERGAMON PRESS LTD. OXFORD, GB, vol. 21, no. 5, 10 September 1997 (1997-09-10), pages 587-597, XP004101112 ISSN: 0097-8493

## Description

### Field of the Invention

The present invention relates to a method, computer system and computer program for generating output data of a digital image which comprises a transparent object. The output data may be prepared for any type of output device like a printing device, display device or memory device.

### Description of the Related Art

Transparent objects of a digital image are objects which do not completely cover the background image behind the transparent object so that the background remains at least partially visible for a viewer. The transparency is defined as a combination of pixels of the transparent object itself with the pixels of the covered background. The image information of one pixel is for example represented by four bytes (R, G, B, α), wherein R represents the intensity of the red color, G the intensity of the green color, B the intensity of the blue color, and α a transparency value. With this representation every one of the three basic colors can be assigned one of 256 different intensity values. The appearance of the pixel is then defined by a superposition of all three color intensities. The α value defines the transparency of a pixel, which can assume 256 values between completely opaque and completely transparent. In the following description the term transparent is to be understood as covering all degrees of transparency apart from totally opaque.

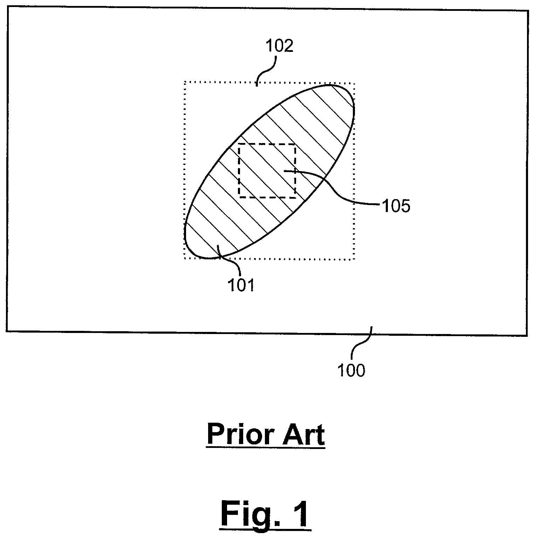

A first example of a transparent object is shown in Figure 1, which shows a screen display 100 of an exemplary digital image. Reference numeral 101 denotes a transparent object in the form of an ellipsoid and reference numeral 105 a background object covered by transparent object 101 but still remaining at least partially visible for the viewer. The representation of the image area of the transparent object 101 therefore requires a combination of the image information of the transparent object with the image information of the background, in the example of Figure 1 background object 105.

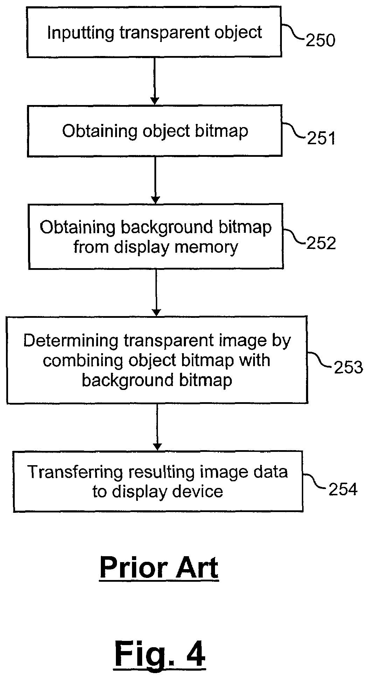

A known method for preparing output data for outputting a digital image including at least one transparent object on a display device is schematically shown in the flow chart of Figure 4. On output devices like common raster displays transparency can be displayed using a bitmap of the background image stored in a memory and combining the pixels of the background bitmap with the pixels of the transparent object itself.

After inputting the transparent object in process operation 250 by well known input devices like a keyboard or a mouse, the bitmap of the transparent object is retrieved in process operation 251. Then the background bitmap comprising the digital image without the newly input transparent object is retrieved from the display memory of the display device in operation 252. In most display devices such a display memory exists in which the bitmap of the previous image not yet including the latest drawing object is stored. During the next operation 253 the transparent image is determined by combining the object bitmap with the background bitmap. A pixel-by-pixel combination is performed and the image data of the background image are overwritten by the respective pixels of the new combined object. The calculated output data are then transferred to the display device in next process operation 254.

The method illustrated in Figure 4 for generating output data for a digital image including at least one transparent object is applicable to a raster display like a cathode ray tube or liquid crystal display. This method, however, only works with so-called "blitable" devices having backtransfer capability, which means that the output data of the previous version of the digital image not yet including the transparent object can be transferred back from the output device (e.g. display) to the computing device where the digital image has been generated. The method of Figure 4 therefore cannot be used for most types of printer devices. Most printer drivers have no backtransfer capabilities and do not offer the possibility to retrieve the bitmap from an earlier generated output, i.e. the previous image without the transparent object.

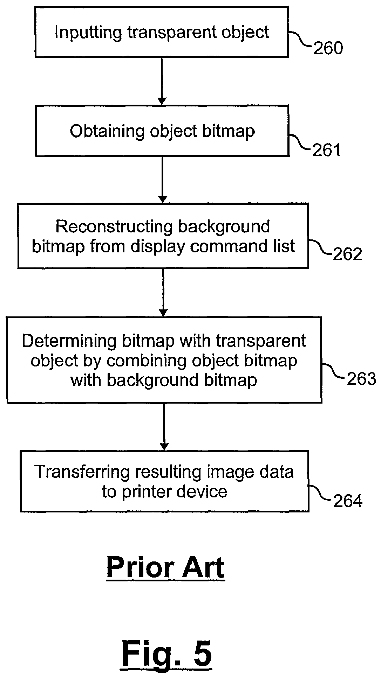

A common solution to this problem is the method illustrated in a flow chart of Figure 5. After inputting the transparent object in operation 260 and obtaining the object bitmap in operation 261 similar to the method shown in Figure 4, the background bitmap, which cannot be transferred back from the output device, is reconstructed from a display command list which stores all display commands of the present digital image. Based on this list of stored display commands the background image can be reconstructed and stored as a bitmap in a memory as will be explained in more detail below. Based on the stored background bitmap and the object bitmap the output data can be determined in operation 263 by pixel-by-pixel combination. The resulting data are transferred in process operation 264 to an output device as for example a printer.

The main drawbacks of the method illustrated in Figure 5 are a large memory consumption for storing the bitmap for the combination or rendering process and the high bandwidth requirements for transferring the calculated output image as bitmap to the output device. Depending on the transparent object and the background large parts or even the complete display area have to be stored as a bitmap, rendered and then transferred to the output device. This is in particular undesirable for types of printers (like for example PostScript Printers) where every output is represented in an ASCII mode, which means that every pixel of the bitmap is represented by characters each requiring at least on byte of memory space.

The area of the digital image which has to be stored as a bitmap for performing the combination process is now shown by way of three different examples illustrated in Figures 1 to 3.

Since a bitmap always represents a rectangular area the image area to be rendered is at least the smallest rectangular area 102 completely covering the transparent object 101. In the example shown in Figure 1 only object 105 is affected by the transparent object and is completely included in image area 102. Therefore, area 102 has to undergo the combination process.

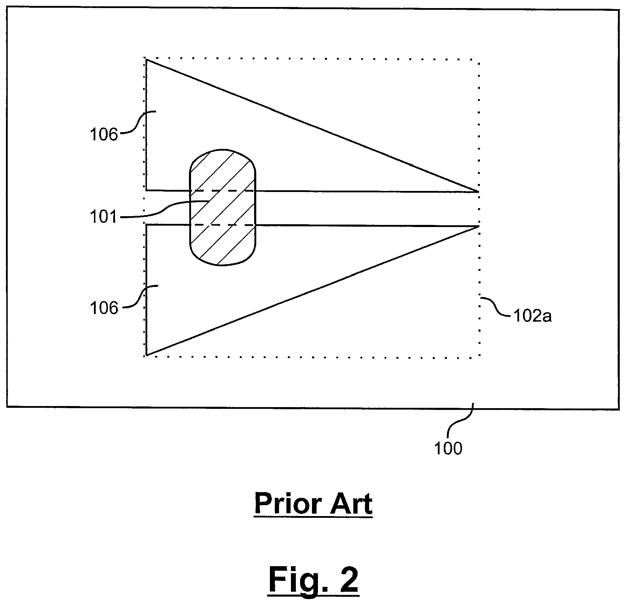

In the example of Figure 2, however, two background objects 106 are partly covered by transparent object 101. The objects of a digital image like objects 106 are in an output file normally represented in a polygon representation, that means the image information is defined by display commands including the positions of the corner points of the object and the color of the object area. For larger objects this representation requires much less memory space than a pixel-by-pixel bitmap representation. For generating the output file including a transparent object, however, the bitmap representation of the transparent object 101 as well as of the objects 106 affected by the transparent object is necessary in order to avoid discontinuities of appearance. Therefore, the image area for which the combination process has to be carried out in the example of Figure 2 is a rather large area 102a. Memory consumption and bandwidth requirements therefore increase.

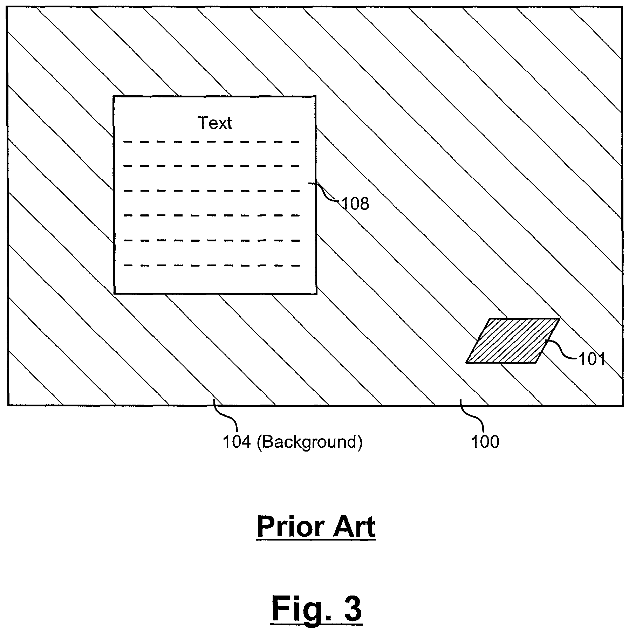

In the example of Figure 3 the digital image 100 includes a background 104, for example background color or background pattern. The digital image of Figure 3 may for example be a presentation slide having a background in the typical corporate design color, a text portion 108 and a logo 101 which in this example is the transparent object. Since the transparent object 101 is positioned on the background 104 the image area to be stored as bitmap is the complete image 100 since the background object is represented as one object in a typical output file. The memory and bandwidth requirements for carrying out the process of Fig. 5 in the example of Figure 3 are therefore enormous.

There is therefore a need for a more efficient way of generating output data of digital images including transparent objects.

### Summary of the Invention

The invention is defined in the appended claims.

The approach described herein allows for a reduction of the memory and bandwidth requirements for preparation and transmission of the output data. Only the image information of those areas of the background image which are actually covered by the transparent object have to be stored as bitmap, combined with the transparent object and forwarded as bitmap data to the output device.

The image areas are rectangular bitmaps. The plurality of image areas represents according a particular embodiment the smallest number of rectangular areas which only include the pixels of the transparent object. The processing and transmission efficiency can thus be further optimized.

The image information of the transparent object may be obtained from an object bitmap containing the transparent object. The image information of the background image is obtained from a background bitmap containing the background image that does not include the transparent object. The background bitmap may be retrieved from an output command list stored in a memory device.

A plurality of rectangular bitmaps may be generated using a mask bitmap masking the area of the transparent object. The mask bitmap may be formed of black pixels representing the transparent object and white pixels representing the remaining image area. The mask bitmap is a binary representation of the area of the transparent object which requires less memory space than the bitmap representation of the digital image itself and simplifies the generation of the plurality of input areas covering the transparent object. The rectangular bitmaps may be generated by horizontally scanning the mask bitmap, detecting the start and end positions of the masked area of the mask bitmap and putting together the pixels of adjacent lines with identical start and end positions to form the rectangular bitmap areas.

The combination of the image information of the transparent object with the image information of the background image may comprise a pixel-by-pixel combination of the respective image data. The weights of the respective pixels of the transparent object and the background image are determined by a transparency value encoded in every pixel of the transparent object.

The output data may be prepared for any type of output device including a printer device, a display device, a memory device, etc. The output device may be connected to the computer system through a wire based or wireless or any other suitable communication link. The output data may be compressed before being transferred to the output device.

A further implementation of the present invention may be realized by a computer program for generating output data of a digital image containing a transparent object having executable program code for performing a method as defined in the appended claims.

A computer code may be embodied in any form of computer program product. A computer program product comprises a medium which stores or transports computer-readable code, or in which computer-readable code can be embedded. Some examples of computer program products are CD-ROM or DVD-ROM disks, ROM charts, floppy disks, magnetic tapes, computer hard drives, servers on a network or signals transmitted over the network representing a computer-readable program code.

The above-mentioned and other features, utilities and advantages of the present invention will become more readily apparent from the following detailed description of preferred embodiments thereof in connection with the accompanying drawings.

### Brief Description of the Drawings

Figure 1 is a schematic illustration of an exemplary digital image comprising a transparent object.
Figure 2 is a schematic illustration of a further example of a digital image comprising a transparent object.
Figure 3 is a schematic illustration of a still further example of a digital image comprising a transparent object.
Figure 4 is a flow chart illustrating a known process for preparing output data for outputting a digital image containing a transparent object on a raster display device.
Figure 5 is a flow chart illustrating a known process for preparing output data for outputting a digital image containing a transparent object on a printer device.
Figure 6 is a schematic illustration of a digital image comprising a transparent object.
Figure 7 is a flow chart illustrating a method of preparing output data of a digital image according to an embodiment of the present invention.
Figure 8 is a flow chart illustrating a process of forming a plurality of image areas according to an embodiment of the present invention.
Figure 9 is a flow chart illustrating a process of combining the image information of the transparent object with the image information of a background image according to an embodiment of the present invention.
Figure 10 consisting of Figures 10A and 10B is a flow chart illustrating a method of preparing and outputting output data of a digital image according to a further embodiment of the present invention.
Figure 11 is a schematic illustration of a bitmap.
Figure 12 is a schematic illustration of a process of forming rectangular bitmap areas according to an embodiment of the present invention.
Figure 13 schematically illustrates a process of combining image information of the transparent object with image information of the background image, wherein Figure 13a) illustrates an object bitmap, Figure 13b) a background bitmap, Figure 13c) a mask bitmap, Figure 13d) a plurality of rectangular image areas and Figure 13e) the output data.
Figure 14 is a schematic illustration of a computer system to which the present invention may be applied.
Figure 15 is a schematic illustration of a configuration of distributed computing devices connected over the internet to which the present invention may also be applied.

### Detailed Description of Preferred Embodiments

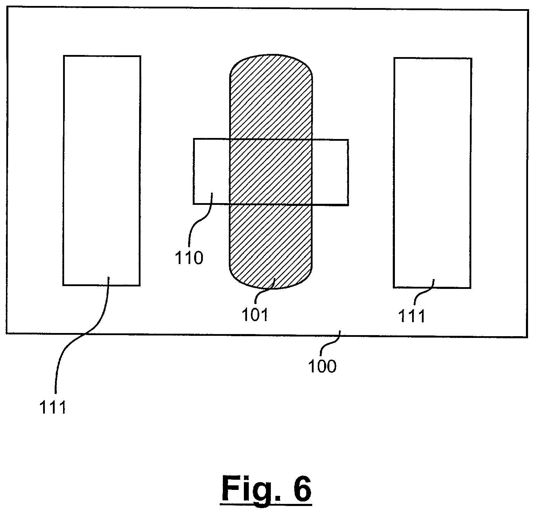

Figure 6 schematically shows a further example of a digital image with a transparent object 101. Background object 110 remains visible behind transparent object 101. The other background objects 111 are not affected by transparent object 101. Output data carrying the information of the digital image with the transparent object for an output device like a printer, remote display or the like are to be generated in an efficient way.

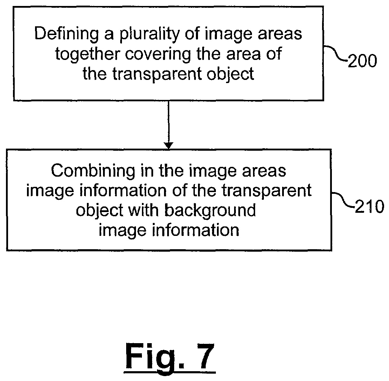

Figure 7 shows a flow chart of a method of generating output data of a digital image including one or a plurality of transparent objects according to an embodiment of the present invention. In a first process operation 200 a plurality of image areas are defined which together cover the area of the transparent object, e.g. object 101 in Figure 6. In the next process operation 210 the image information of the transparent object is combined with the image information of the background image in the image areas defined in previous process operation 200. The image area for which the combination processing has to be carried out and the size and the output file of the resulting image can therefore be reduced. This increases memory, processing as well as transmission bandwidth efficiency.

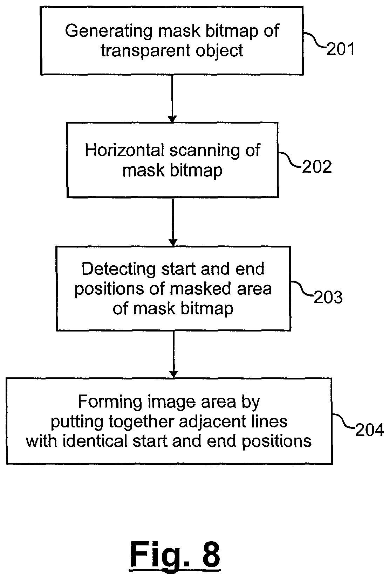

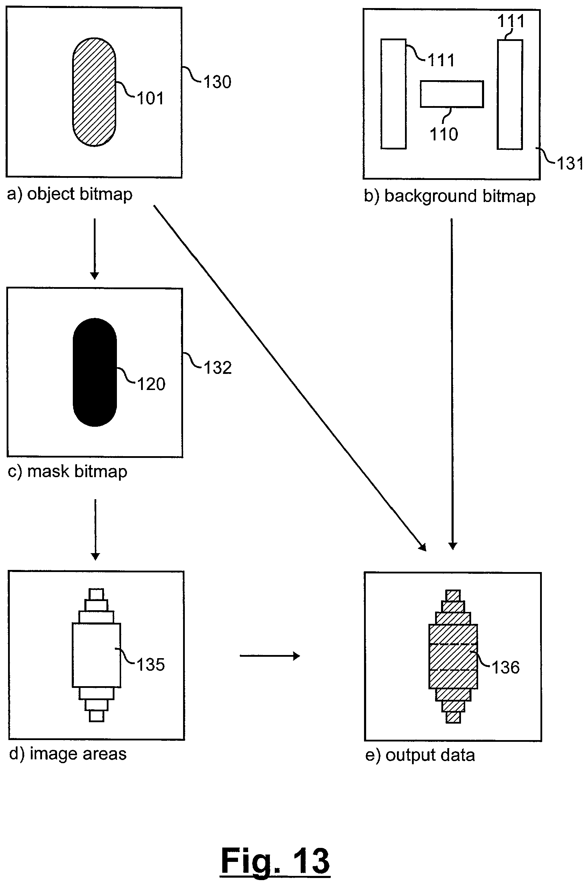

An example of a process of defining the plurality of image areas (operation 200 in Figure 7) is now explained with reference to Figure 8. In the first operation 201 a mask bitmap of the transparent object is created. A mask bitmap is a bitmap covering the whole area of the digital image, wherein every pixel is represented as binary information, either black or white. The area of the transparent object or a plurality of transparent objects are represented by black pixels and the remaining area of the bitmap by white pixels or vice versa. An example of a mask bitmap is shown in Figure 13c. Mask bitmap 132 represents the transparent object 101 shown in Figure 13a. The mask area 120 consisting of black pixels covers the image area of transparent object 101. The pixels of the mask bitmap can be represented in binary fashion. The mask bitmap therefore requires much less memory space than the complete bitmap of the digital image itself. Furthermore, the mask bitmap allows a simple detection whether or not a pixel belongs to the area covered by the transparent object.

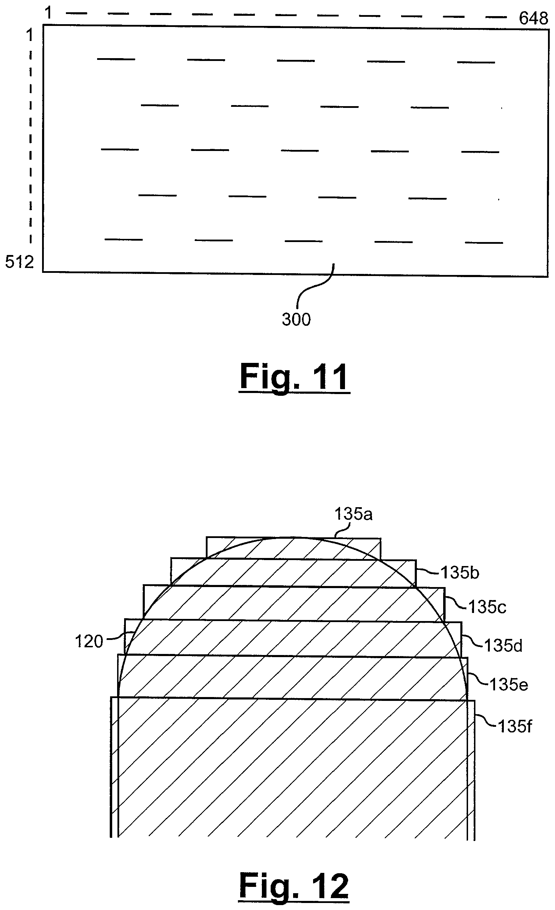

In the next process operation 202 in Figure 8 the mask bitmap is scanned in horizontal direction. This process is schematically illustrated in Figure 8. During the scanning procedure the start and end positions of the masked area 120 are detected in every scanned line (process operation 203 in Figure 8). This process is performed by detecting either the black or white pixels of the mask bitmap. The image area for combining (rendering) the image information of the transparent object with the image information of the background object has to be a bitmap consisting of a plurality of pixels arranged in a rectangular shape. An example of such a bitmap 300 is schematically illustrated in Figure 11. The shown bitmap has 512 lines each comprising 648 pixels thus forming a rectangular image area of a total of 512 x 648 pixels.

In the next operation 204 of the process illustrated in Figure 8 the respective image areas are formed by putting together adjacent lines for which identical start and end positions on the mask bitmap have been detected. In the example of Figure 12 six image areas 135a to 135f are illustrated. Since the image areas must have a rectangular shape, curved areas of the mask bitmap may result in image areas covering only one single line. Areas in which the outlines of the transparent object are substantially vertical result in larger bitmap areas like bitmap area 135f in Figure 12.

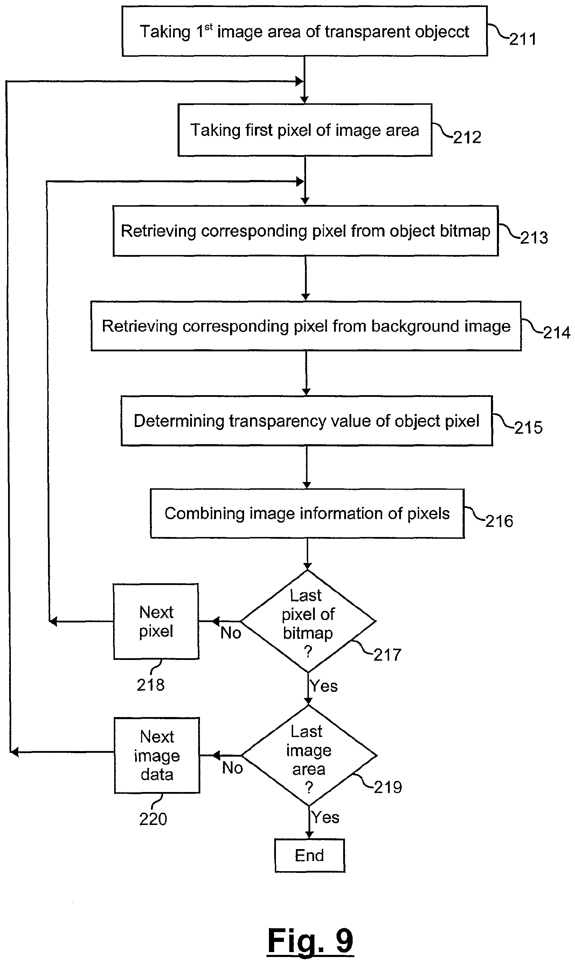

An example of the process of combining the image information of the transparent object with the image information of the background image (operation 210 in Figure 7) in a bitmap area (also called off-screen bitmap since the bitmap is stored in a memory not related to a display) is now explained with reference to Figure 9.

The process starts in operation 211 with a first of a plurality of image areas which have been defined earlier. In operation 212 a first pixel of this image area is detected and the corresponding pixel from the object bitmap is retrieved in the next operation 213. In the following operation 214 the corresponding pixel from the background image is retrieved. Then, in operation 215, the transparency value of the pixel of the transparent object is determined. As has been explained above, the transparency of a transparent object is usually encoded as a transparency value (α-value) in the image information of the transparent object. If, for example, the image information of one pixel is represented in the (R,G,B, α)-form described in the introductory portion to this description, the weight value α represents the transparency of the pixel. Therefore, the image information of the corresponding pixel at the same position of the background image has to be taken into account for calculating a respective pixel of the output data of the digital image depending on the α-value. The resultant pixel of the output data set is then calculated in operation 216 by a combination of the image information of the corresponding transparent object and background pixels.

The pixel combination process may be illustrated by a small example. α can assume 256 different values between 0 (completely opaque) and 255 (fully transparent). Let α for a particular pixel have the value α = 191 which is equivalent to a transparency of (α + 1)/256 = 0,75. That is, the intensity values of the three colors of the pixel of the background object have a weight of 0,75 and the respective intensities of the pixel of the transparent object a weight of 0.25. If, for example, the intensity value of the red color of the background image is R_{Bi} = 164 and the corresponding value of the transparent object R_{TO} = 40, the red-value of the combined pixel is calculated as follows: R_{C} = 164 x 0,75 + 40 x 0,25 = 133. The same calculation is carried out for the green- and blue-values. A similar calculation can be performed for other pixel representations than the (R, G, B, α)-representation.

After performing the combination processing it is checked in operation 217 whether or not the last pixel of the image area (bitmap bmp) has been reached. If this is the case, the process proceeds to operation 219. If this is not the case the process proceeds to the next pixel and performs operations 213 to 216 with this pixel.

If the last pixel of the image area has been reached the same procedure is performed for the following image areas until the last image area has been reached (operation 219). The process of preparing the output data of the digital image is then finished.

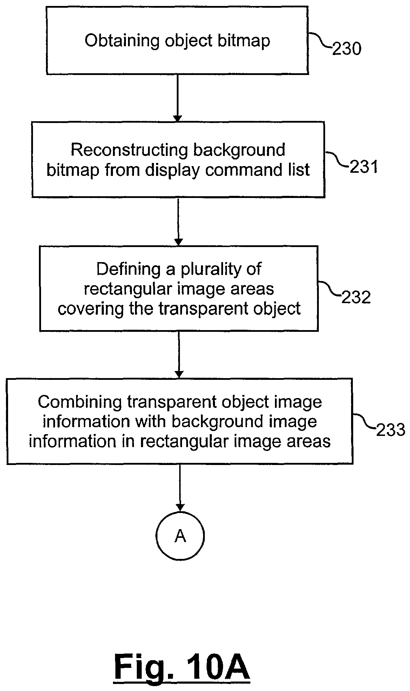

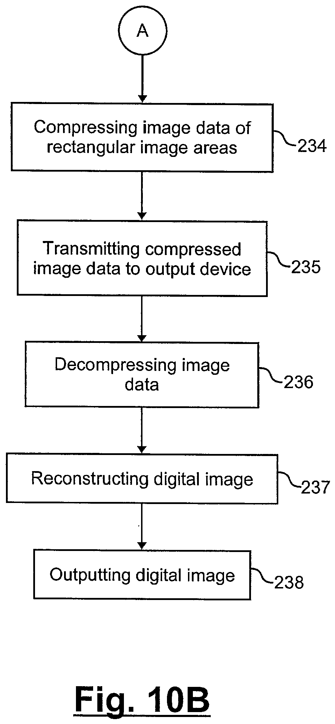

A further embodiment of a method of generating output data of a digital image with a transparent object according to the present invention is illustrated in Figure 10, consisting of Figure 10A and 10B.

In process operation 230 an object bitmap of the transparent object is obtained from input command data of the transparent object. An object bitmap of transparent object 101 of Figure 6 is schematically shown in Figure 13A. The object bitmap 130 is stored in a memory of the computer device. The object bitmap is a representation of the image information of the digital image containing the transparent object. The image information of every pixel may be encoded in the (R,G,B, α)-form or in any other suitable data format. The image information may be represented by ASCII characters. The image information of one pixel typically consists of between one byte (gray scale image) and 8 bytes (high resolution color representation). The uncompressed bitmap of a high resolution of a picture therefore contains a large amount of data.

In process operation 231 a bitmap of the background image has to be created in a memory device. For this purpose the list of display commands of the digital image, which is for example stored in a metafile is used. The list of display commands contains all image information of the background image not including the newly created transparent object. Examples of such display commands contained in the list are given in pseudo code as follows:
rectangle (44, 57; 20, 100)
line (15, 240; 15, 420)
circle (185, 225; 33)

The rectangle is represented by the coordinates of the upper left hand corner and the length and width of the rectangle, the lines by the coordinates of the start and end points and the circle by the center coordinates and the radius. The shown display commands are an example of a polygon representation of image objects. The present invention, however, is not restricted to any particular form of the display command, and any other representations may of course also be possible.

Using the information of these display commands a background bitmap is generated in a memory, e.g. a memory area of a computer RAM memory, a memory area of a chipcard, a memory of a wireless device or any other suitable memory device. An example of the background bitmap 131 of the digital image 100 of Figure 6 is shown in Figure 13b. The background bitmap contains all information of the digital image with the exception of the transparent object itself.

In the next operation 232 a plurality of rectangular image areas is formed, which together cover the display area of the transparent object. This process has been explained in detail with reference to Figures 8 and 12. A plurality of rectangular image areas 135 covering the area of transparent object 101 is for example shown in Figure 13d.

In the next process operation 233, the image information of the transparent object is combined with the image information of the background image in each of the rectangular image areas 135. The result of this combination process are a plurality of image areas 136 containing the correct output image information of the respective image area. The combination process has been explained in detail above with reference to Figure 9.

In operation 234 (Figure 10B) the image data contained in the image areas 136 are compressed and then transmitted in operation 235 to an output device. The image data are then decompressed (operation 236) and the digital image containing the transparent object is reconstructed. The output data of the calculated bitmap image areas replace the image information of the respective image areas of the background image already present in the output device. A complete digital image of the transparent object can so be correctly reconstructed without irregularities.

The storage as bitmap, combination processing and transfer to the output device as pixel data are only to be performed for the image area of the transparent object. The storage, processing and bandwidth requirements can therefore be reduced considerably. For a PostScript file having a typical display size and resolution the file size of the digital image represented as bitmap may be up to 30 MB. If the transparent object only covers a small part of the total image the image area to rendered can be reduced substantially using embodiments of the present invention. Accordingly, the amount of data to be stored, processed and transmitted can be reduced up to 1/1000 of the amount necessary when rendering the complete image area.

In the last process operation 238 the reconstructed digital image is output.

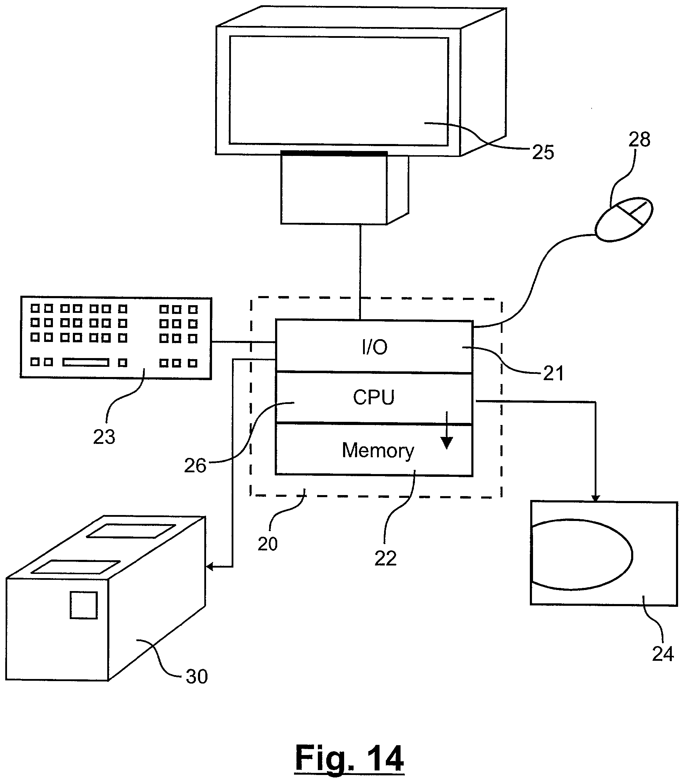

The present invention is applicable to a hardware configuration like a personal computer or a workstation as illustrated schematically in Figure 14. The computer may comprise a central processing unit CPU 26, an input/output unit 21, an internal memory 22 and an external memory 24. The bitmaps are preferably stored in the internal memory 22 and the combination processing as well as a compressing operation may be performed by the CPU 26. The computer may further comprise standard input devices like a keyboard 23, a mouse 28 or speech processing means (not shown). The input/output unit 21 forms an interface to an output device 30 like laser printer, an inkjet printer, a storage device, a remote display or any other suitable output device.

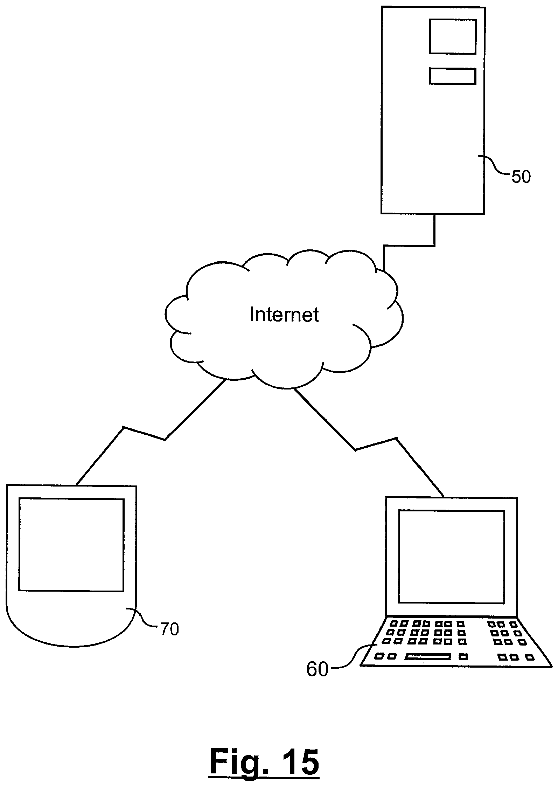

The invention, however, may also be applied to a configuration as schematically illustrated in Figure 15. The digital image may be displayed on a screen of a client device 60 like desktop computer, laptop computer or the like. The client device 60 may be coupled with a server device 50 over the internet or any other suitable communication link. The operations explained with reference to Figures 7 to 10 may be partly or in total carried out on server computer 50 accessible by the client device 60 over the internet. The output device (not shown) may be a local output device like a printer directly connected to the client 60 as shown in Figure 14, an output device connected to a server or a remote device 70 like a handheld computer or a web-enabled mobile telephone or thin client device.

While the invention has been shown with reference to the particular embodiments thereof, it will be understood by those skilled in the art that various other changes in the form and details may be made therein without departing from the spirit and scope of the invention.

A further implementation of the present invention provides a method of generating a digital image including a transparent object, the method comprising the steps of defining a plurality of image areas which together cover the area of transparent object and combining in the plurality of image areas an image information of the transparent object with an image information of a background image not including the transparent object. The method may further comprise the steps of obtaining the image information of the transparent object from an object bitmap and/or the step of obtaining image information of the background image from a background bitmap. A background bitmap may be obtained by using a stored output command list of the digital image. The method may comprise a step of generating a plurality of rectangular bitmaps using a mask bitmap masking the area of the transparent object. The generating step may include horizontally scanning the mask bitmap, detecting the start and end positions of the masked area of the mask bitmap and putting together the pixels of adjacent lines having common start and end positions.

A still further implementation of the present invention provides a computer system for generating output data for a digital image including a transparent object, the computer system comprising means for defining a plurality of image areas which together cover the area of the transparent object and means for combining, in the plurality of image areas, an image information of the transparent object with an image information of a background image not including the transparent object.

## Claims

1. A method of generating output data of a digital image including a transparent object (101), the method comprising:
defining a plurality of image areas (135) which together cover the area of the transparent object (101), wherein each image area (135) is a rectangular bit map; and
combining, in the plurality of image areas, image information of the transparent object with image information of a background image that does not include the transparent object, wherein the image information of the background image is obtained from a background bit map.

2. The method of claim 1, wherein the plurality of image areas (135) represents the smallest number of rectangular bitmaps consisting only of the pixels of the transparent object.

3. The method of one of claims 1 or 2, comprising obtaining the image information of the transparent object from an object bitmap.

4. The method of any preceding claim, wherein the background bitmap is obtained using a stored output command list of the digital image.

5. The method of any preceding claim, comprising generating the plurality of rectangular bitmaps using a mask bitmap masking the area of the transparent object.

6. The method of claim 5, comprising generating the rectangular bitmaps by horizontally scanning the mask bitmap, detecting the start and end positions of the masked area of the mask bitmap, and putting together the pixels of adjacent lines having a common start and end position to form a rectangular bitmap.

7. The method of claim 5 or 6, wherein the masked area of the mask bitmap is comprised of black pixels and the remaining area is comprised of white pixels.

8. The method of any preceding claim, comprising a pixel-by-pixel combination of the pixel data of the transparent object with the respective pixel data of the background image.

9. The method of claim 8, wherein the weights of the pixels of the transparent object and of the background image, respectively, are determined by a transparency value encoded in every pixel of the transparent object.

10. The method of any preceding claim, comprising formatting the output data for an output device selected from a printer device, a display device and a memory device.

11. The method of claim 10, wherein the output device is a remote output device.

12. The method of any preceding claim, comprising compressing the output data and transmitting the compressed output data to an output device.

13. The method of any preceding claim, wherein the digital image is comprised of a plurality of pixels represented by characters.

14. A computer system for generating output data of a digital image including a transparent object (101), the computer system comprising a processing unit (26) for:
defining a plurality of image areas (135) which together cover the area of the transparent object (101), wherein each image area (135) is a rectangular bit map; and
combining, in the plurality of image areas, image information of the transparent object with image information of a background image that does not include the transparent object, wherein the image information of the background image is obtained from a background bit map.

15. The computer system of claim 14, wherein the plurality of image areas (135) represents the smallest number of rectangular bitmaps consisting only of the pixels of the transparent object.

16. The computer system of claim 14 or 15, wherein the processing unit is adapted for obtaining the image information of the transparent object from an object bitmap.

17. The computer system of any one of claims 14 to 16, wherein the background bitmap is obtained using a stored output command list of the digital image.

18. The computer system of one of claims 14 to 17, wherein the plurality of rectangular bitmaps is generated using a mask bitmap masking the area of the transparent object.

19. The computer system of claim 18, wherein the rectangular bitmaps are generated by horizontally scanning the mask bitmap, detecting the start and end positions of the masked area of the mask bitmap, and putting together the pixels of adjacent lines having a common start and end position.

20. The computer system of claim 18 or 19, wherein the masked area of the mask bitmap is comprised of black pixels and the remaining area is comprised of white pixels.

21. The computer system of one of claims 14 to 20, wherein the processing unit is adapted for performing a pixel-by-pixel combination of the pixel data of the transparent object with the respective pixel data of the background image.

22. The computer system of claim 21, wherein the weights of the pixels of the transparent object and of the background image, respectively, are determined by a transparency value encoded in every pixel of the transparent object.

23. The computer system of one of claims 14 to 22, wherein the output data are formatted for a output device selected from a printer device, a display device or a memory device.

24. The computer system of claim 23, wherein the output device is a remote output device.

25. The computer system of one of claims 14 to 24, comprising a compressing unit (26) for compressing the output data and a transmission unit (21) for transmitting the compressed output data to an output device.

26. The computer system of one of claims 14 to 25, wherein the digital image is comprised of a plurality of pixels represented by characters.

27. A computer program product for generating output data of a digital image containing a transparent object (101), the computer program comprising executable program code for carrying out the method of any one of claims 1 to 13.

28. A computer program comprising executable program code for carrying out the method of any one of claims 1 to 13.

## Patentansprüche

1. Verfahren zur Erzeugung von Ausgabedaten eines digitalen Bilds, das ein transparentes Objekt (101) umfasst, wobei das Verfahren umfasst:
Definieren einer Vielzahl von Bildbereichen (135), die gemeinsam den Bereich des transparenten Objekts (101) bedecken, wobei jeder Bildbereich (135) eine rechteckige Bitmap ist; und
Kombinieren, in der Vielzahl von Bildbereichen, von Bildinformationen des transparenten Objekts mit Bildinformationen eines Hintergrundbilds, das nicht das transparente Objekt aufweist, wobei die Bildinformationen des Hintergrundbilds aus einer Hintergrund-Bitmap erhalten werden.

2. Verfahren nach Anspruch 1, wobei die Vielzahl von Bildbereichen (135) die kleinste Anzahl von rechteckigen Bitmaps darstellt, die nur aus den Pixeln des transparenten Objekts bestehen.

3. Verfahren nach einem der Ansprüche 1 oder 2, das das Erhalten der Bildinformationen des transparenten Objekts aus einer Objekt-Bitmap umfasst.

4. Verfahren nach einem der vorhergehenden Ansprüche, wobei die Hintergrund-Bitmap unter Verwendung einer gespeicherten Ausgabebefehlsliste des digitalen Bilds erhalten wird.

5. Verfahren nach einem der vorhergehenden Ansprüche, das das Erzeugen der Vielzahl von rechteckigen Bitmaps unter Verwendung einer Masken-Bitmap, die den Bereich des transparenten Objekts maskiert, umfasst.

6. Verfahren nach Anspruch 5, das das Erzeugen der rechteckigen Bitmaps durch horizontales Abtasten der Masken-Bitmap, Detektieren der Start- und der Endposition des maskierten Bereichs der Masken-Bitmap und Zusammenfügen der Pixel von aneinander angrenzenden Linien mit einer gemeinsamen Befehlsstart- und -endposition zum Ausbilden einer rechteckigen Bitmap umfasst.

7. Verfahren nach Anspruch 5 oder 6, wobei der maskierte Bereich der Masken-Bitmap aus schwarzen Pixeln gebildet ist und der verbleibende Bereich aus weißen Pixeln gebildet ist.

8. Verfahren nach einem der vorhergehenden Ansprüche, das eine Pixel-für-Pixel-Kombination der Pixeldaten des transparenten Objekts mit den jeweiligen Pixeldaten des Hintergrundbilds umfasst.

9. Verfahren nach Anspruch 8, wobei die Gewichte jeweils der Pixel des transparenten Objekts und des Hintergrundbilds mittels eines Transparenzwerts ermittelt werden, der in jedem Pixel des transparenten Objekts kodiert ist.

10. Verfahren nach einem der vorhergehenden Ansprüche, das das Formatieren der Ausgabedaten für eine Ausgabevorrichtung, die aus einer Druckervorrichtung, einer Anzeigevorrichtung und einer Speichervorrichtung ausgewählt ist, umfasst.

11. Verfahren nach Anspruch 10, wobei die Ausgabevorrichtung eine entfernt angeordnete Ausgabevorrichtung ist.

12. Verfahren nach einem der vorhergehenden Ansprüche, das das Komprimieren der Ausgabedaten und das Senden der komprimierten Ausgabedaten an eine Ausgabevorrichtung umfasst.

13. Verfahren nach einem der vorhergehenden Ansprüche, wobei das digitale Bild aus einer Vielzahl von Pixeln gebildet ist, die durch Zeichen dargestellt sind.

14. Computersystem zur Erzeugung von Ausgabedaten eines digitalen Bilds, das ein transparentes Objekt (101) umfasst, wobei das Computersystem eine Verarbeitungseinheit (26) umfasst zum:
Definieren einer Vielzahl von Bildbereichen (135), die gemeinsam den Bereich des transparenten Objekts (101) bedecken, wobei jeder Bildbereich (135) eine rechteckige Bitmap ist; und
Kombinieren, in der Vielzahl von Bildbereichen, von Bildinformationen des transparenten Objekts mit Bildinformationen eines Hintergrundbilds, das nicht das transparente Objekt aufweist, wobei die Bildinformationen des Hintergrundbilds aus einer Hintergrund-Bitmap erhalten werden.

15. Computersystem nach Anspruch 14, wobei die Vielzahl von Bildbereichen (135) die kleinste Anzahl von rechteckigen Bitmaps darstellt, die nur aus den Pixeln des transparenten Objekts bestehen.

16. Computersystem nach Anspruch 14 oder 15, wobei die Verarbeitungseinheit so ausgelegt ist, dass sie die Bildinformationen des transparenten Objekts aus einer Objekt-Bitmap erhält.

17. Computersystem nach einem der Ansprüche 14 bis 16, wobei die Hintergrund-Bitmap unter Verwendung einer gespeicherten Ausgabebefehlsliste des digitalen Bilds erhalten wird.

18. Computersystem nach einem der Ansprüche 14 bis 17, wobei die Vielzahl von rechteckigen Bitmaps unter Verwendung einer Masken-Bitmap erzeugt wird, die den Bereich des transparenten Objekts maskiert.

19. Computersystem nach Anspruch 18, wobei die rechteckigen Bitmaps durch horizontales Abtasten der Masken-Bitmap, Detektieren der Start- und der Endposition des maskierten Bereichs der Masken-Bitmap und Zusammenfügen der Pixel von aneinander angrenzenden Linien mit einer gemeinsamen Befehlsstart- und -endposition erzeugt werden.

20. Computersystem nach Anspruch 18 oder 19, wobei der maskierte Bereich der Masken-Bitmap aus schwarzen Pixeln gebildet ist und der verbleibende Bereich aus weißen Pixeln gebildet ist.

21. Computersystem nach einem der Ansprüche 14 bis 20, wobei die Verarbeitungseinheit so ausgelegt ist, dass sie eine Pixel-für-Pixel-Kombination der Pixeldaten des transparenten Objekts mit den jeweiligen Pixeldaten des Hintergrundbilds durchführt.

22. Computersystem nach Anspruch 21, wobei die Gewichte jeweils der Pixel des transparenten Objekts und des Hintergrundbilds mittels eines Transparenzwerts ermittelt werden, der in jedem Pixel des transparenten Objekts kodiert ist.

23. Computersystem nach einem der Ansprüche 14 bis 22, wobei die Ausgabedaten für eine Ausgabevorrichtung formatiert sind, die aus einer Druckervorrichtung, einer Anzeigevorrichtung oder einer Speichervorrichtung ausgewählt ist.

24. Computersystem nach Anspruch 23, wobei die Ausgabevorrichtung eine entfernt angeordnete Ausgabevorrichtung ist.

25. Computersystem nach einem der Ansprüche 14 bis 24, das eine Komprimiereinheit (26) zum Komprimieren der Ausgabedaten und eine Sendeeinheit (21) zum Senden der komprimierten Ausgabedaten an eine Ausgabevorrichtung umfasst.

26. Computersystem nach einem der Ansprüche 14 bis 25, wobei das digitale Bild aus einer Vielzahl von Pixeln gebildet ist, die durch Zeichen dargestellt sind.

27. Computerprogrammprodukt zur Erzeugung von Ausgabedaten eines digitalen Bilds, das ein transparentes Objekt (101) enthält, wobei das Computerprogrammprodukt einen ausführbaren Programmcode zum Durchführen des Verfahrens nach einem der Ansprüche 1 bis 13 umfasst.

28. Computerprogramm, das einen ausführbaren Programmcode zum Durchführen des Verfahrens nach einem der Ansprüche 1 bis 13 umfasst.

## Revendications

1. Procédé de génération de données de sortie d'une image numérique comprenant un objet transparent (101), le procédé comprenant les étapes suivantes :
définir une pluralité de zones d'image (135), qui ensemble couvrent la surface de l'objet transparent (101), où chaque zone d'image (135) est un topogramme binaire rectangulaire ; et
combiner, dans la pluralité de zones d'image, des informations d'image de l'objet transparent avec des informations d'image d'une image d'arrière-plan qui ne comprend pas l'objet transparent, où les informations d'image de l'image d'arrière-plan sont obtenues à partir d'un topogramme binaire d'arrière-plan.

2. Procédé selon la revendication 1, dans lequel la pluralité de zones d'image (135) représente le plus petit nombre de topogrammes binaires rectangulaires constitués uniquement des pixels de l'objet transparent.

3. Procédé selon la revendication 1 ou la revendication 2, comprenant d'obtenir les informations d'image de l'objet transparent à partir d'un topogramme binaire d'objet.

4. Procédé selon l'une quelconque des revendications précédentes, dans lequel le topogramme binaire d'arrière-plan est obtenu au moyen d'une liste de commandes de sortie stockée de l'image numérique.

5. Procédé selon l'une quelconque des revendications précédentes, comprenant de générer la pluralité de topogrammes binaires rectangulaires au moyen d'un topogramme binaire de masquage masquant la zone de l'objet transparent.

6. Procédé selon la revendication 5, comprenant de générer les topogrammes binaires rectangulaires en balayant le topogramme binaire de masquage, en détectant les positions de début et de fin de la zone masquée du topogramme binaire de masquage, et en plaçant ensemble les pixels des lignes adjacentes ayant des positions de début et de fin communes pour former un topogramme binaire rectangulaire.

7. Procédé selon la revendication 5 ou la revendication 6, dans lequel la zone masquée du topogramme binaire de masquage est constituée de pixels noirs et la zone restante est constituée de pixels blancs.

8. Procédé selon l'une quelconque des revendications précédentes, comprenant une combinaison pixel par pixel des données de pixel de l'objet transparent avec les données de pixel respectives de l'image d'arrière-plan.

9. Procédé selon la revendication 8, dans lequel les poids des pixels de l'objet transparent et de l'image d'arrière-plan, respectivement, sont déterminés par une valeur de transparence encodée dans chaque pixel de l'objet transparent.

10. Procédé selon l'une quelconque des revendications précédentes, comprenant de formater les données de sortie pour un périphérique de sortie sélectionné parmi un périphérique d'impression, un périphérique d'affichage et un périphérique de mémoire.

11. Procédé selon la revendication 10, dans lequel le périphérique de sortie est un périphérique de sortie distant.

12. Procédé selon l'une quelconque des revendications précédentes, comprenant de compresser les données de sortie et de transmettre les données de sortie compressées à un périphérique de sortie.

13. Procédé selon l'une quelconque des revendications précédentes, dans lequel l'image numérique est constituée d'une pluralité de pixels représentés par des caractères.

14. Système informatique destiné à générer des données de sortie d'une image numérique comprenant un objet transparent (101), le système informatique comprenant une unité de traitement (26) pour :
définir une pluralité de zones d'image (135), qui ensemble couvrent la surface de l'objet transparent (101), où chaque zone d'image (135) est un topogramme binaire rectangulaire ; et
combiner, dans la pluralité de zones d'image, des informations d'image de l'objet transparent avec des informations d'image d'une image d'arrière-plan qui ne comprend pas l'objet transparent, où les informations d'image de l'image d'arrière-plan sont obtenues à partir d'un topogramme binaire d'arrière-plan.

15. Système informatique selon la revendication 14, dans lequel la pluralité de zones d'image (135) représente le plus petit nombre de topogrammes binaires rectangulaires constitués uniquement des pixels de l'objet transparent.

16. Système informatique selon la revendication 14 ou la revendication 15, dans lequel l'unité de traitement est adaptée pour obtenir les informations d'image de l'objet transparent à partir d'un topogramme binaire d'objet.

17. Système informatique selon l'une des revendications 14 à 16, dans lequel le topogramme binaire d'arrière-plan est obtenu au moyen d'une liste de commandes de sortie stockée de l'image numérique.

18. Système informatique selon l'une des revendications 14 à 17, dans lequel la pluralité de topogrammes binaires rectangulaires est générée au moyen d'un topogramme binaire de masquage masquant la zone de l'objet transparent.

19. Système informatique selon la revendication 18, dans lequel les topogrammes binaires rectangulaires sont générés en balayant le topogramme binaire de masquage, en détectant les positions de début et de fin de la zone masquée du topogramme binaire de masquage, et en plaçant ensemble les pixels des lignes adjacentes ayant des positions de début et de fin communes.

20. Système informatique selon la revendication 18 ou la revendication 19, dans lequel la zone masquée du topogramme binaire de masquage est constituée de pixels noirs et la zone restante est constituée de pixels blancs.

21. Système informatique selon l'une des revendications 14 à 20, dans lequel l'unité de traitement est adaptée pour procéder à une combinaison pixel par pixel des données de pixel de l'objet transparent avec les données de pixel respectives de l'image d'arrière-plan.

22. Système informatique selon la revendication 21, dans lequel les poids des pixels de l'objet transparent et de l'image d'arrière-plan, respectivement, sont déterminés par une valeur de transparence encodée dans chaque pixel de l'objet transparent.

23. Système informatique selon l'une des revendications 14 à 22, dans lequel les données de sortie sont formatées pour un périphérique de sortie sélectionné parmi un périphérique d'impression, un périphérique d'affichage et un périphérique de mémoire.

24. Système informatique selon la revendication 23, dans lequel le périphérique de sortie est un périphérique de sortie distant.

25. Système informatique selon l'une des revendications 14 à 24, comprenant une unité de compression (26) pour compresser les données de sortie et une unité de transmission (21) pour transmettre les données de sortie compressées à un périphérique de sortie.

26. Système informatique selon l'une des revendications 14 à 25, dans lequel l'image numérique est constituée d'une pluralité de pixels représentés par des caractères.

27. Produit programme informatique destiné à générer des données de sortie d'une image numérique contenant un objet transparent (101), le programme informatique comprenant un code de programme exécutable pour exécuter le procédé de l'une quelconque des revendications 1 à 13.

28. Programme informatique comprenant un code de programme exécutable pour exécuter le procédé de l'une quelconque des revendications 1 à 13.
